# EUROPEAN PATENT APPLICATION

(11) **EP 1 801 511 A1**
(43) Date of publication of application: **27.06.2007**
(21) Application number: 06256387.9
(22) Date of filing: 15.12.2006
(51) Int. Cl.: F24F 11/00

(54) **Air conditioner and method for controlling the same for soft start of fan motor**

(30) Priority: 22.12.2005 KR 20050127964
(71) Applicant: LG ELECTRONICS INC., Seoul (KR)
(72) Inventor: Choi, Jin Tak, Changwon-si, Kyungsangnam-do (KR)
(74) Representative: Palmer, Jonathan R.

(57) **Abstract**

Disclosed are an air conditioner and a method for controlling the air conditioner which can increase the power source applied to a motor until the amount of the wind supplied from an indoor fan reaches a target setting amount of wind after the power source restricted at a predetermined ratio of the maximum power source is applied to the motor when the motor is initially operated. According to the air conditioner and the method for controlling the air conditioner according to the present invention, since the maximum voltage is not applied during the initial operation of a motor, vibration and impact noise generated during the initial operation of the motor is reduced. Further, damage to the motor due to an abrupt operation of the motor is prevented, thereby improving the reliability of the motor.

## Description

### Field of the Invention

The present invention relates to an air conditioner and a method for controlling the air conditioner, and more particularly to an air conditioner and a method for controlling the air conditioner which can prevent damage to a motor which can be generated when an indoor fan is initially operated and can minimize vibration and noise due to rotation of the indoor unit.

### Description of the Related Art

Generally, an air conditioner sucks interior air, cools or heats the sucked air by heat-exchanging the sucked air, and discharge the cooled or heated air into the interior of a room.

The air conditioner includes a window type air conditioner installed in a window or the like by mounting a refrigerating cycle unit to one body and a separation type air conditioner in which an indoor unit and an outdoor unit are separated and are installed in the interior and exterior of a room.

On the other hand, the motor driving a fan provided in the air conditioner consumes the most electric power when it is initially operated. If the motor is driven, noise and vibration are generated due to the moment of inertia physically generated when the motor starts to rotate from the stop state or starts to stop while rotating.

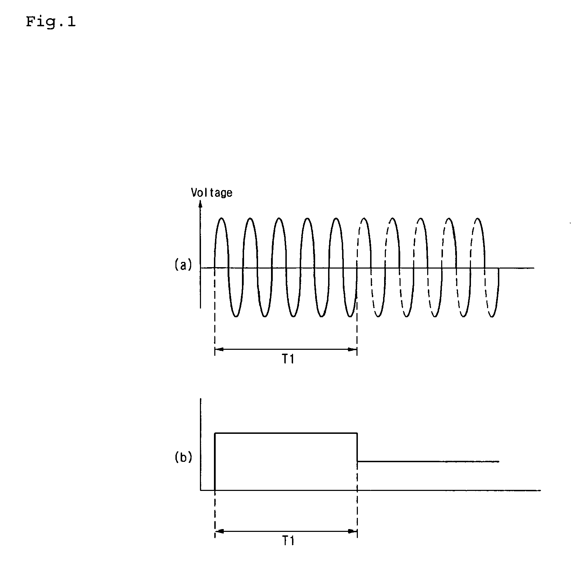

FIGs. 1(a) and 1(b) are graphs showing the operation state of a conventional air conditioner.

FIG. 1(a) is a graph showing voltages input to an indoor fan. FIG. 1 (b) is a graph showing the change of the amount of the wind discharged from the indoor fan.

As shown in FIG. 1(a), the conventional air conditioner applies the power source supplied to the indoor fan for a control time T1 at the maximum voltage during the initial operation to operate the indoor fan at the maximum RPM.

If the indoor fan is operated at the maximum RPM, the power supplied to the indoor fan is rapidly reduced to change the maximum RPM to a target RMP. Then, the amount of the wind of the indoor fan reaches a target setting amount of wind as shown in FIG. 1(b).

However, if the maximum voltage is applied to the motor and the motor is abruptly rotated to the maximum RPM, much power is consumed by the moment of inertia and impact noise and vibration are generated.

Therefore, the conventional air conditioner generates the vibration together with the impact noise when the motor is initially operated, thereby causing an excessive burden and giving a user an pleasant feeling due to the noise..

### SUMMARY OF THE INVENTION

Accordingly, the present invention has been developed in order to address the above-mentioned problems occurring in the prior art. It would be desirable to provide an air conditioner and a method for controlling the air conditioner which can prevent an excessive burden to a motor which is generated by applying the maximum power source to the motor when the motor driving an indoor fan is initially operated.

It would also be desirable to provide an air conditioner and a method for controlling the air conditioner which can remarkably reducing generation of noise and vibration by applying a power source to a motor at a predetermined ratio of the maximum power source when the motor is initially operated, thereby improving the stability of the air conditioner.

Accordingly, the invention provides an air conditioner comprising: a power source supply unit supplying a power source for the operation of the air conditioner; a fan driving unit driving an indoor fan with the power source supplied from the power source supply unit; and a control unit allowing the power source reach a target power source after applying the power source of a predetermined ratio of a maximum power source to the fan driving unit when the indoor fan is initially operated.

According to another aspect of the present invention, there is provided a method for controlling an air conditioner, which comprises' the steps of: supplying a power source restricted to a predetermined ratio of a maximum power source to a fan driving unit, when an indoor fan is initially operated; and allowing the power source supplied to the fan driving unit to reach a target power source.

According to another aspect of the present invention, there is provided a method for controlling an air conditioner, which comprises the steps of: applying a power source restricted to a predetermined ratio of a maximum power source to a fan driving unit driving an indoor fan when the air conditioner is initially operated; and increasing gradually the power source applied to the fan driving unit so that the amount of wind supplied by the indoor fan can reach a target setting amount of the wind.

According to the air conditioner and the method for controlling the air conditioner, the power source supplied to the motor when the air conditioner is initially operated is supplied at a predetermined ratio of the maximum power source and the power source supplied to the motor gradually increases until it reaches a target setting amount of wind, thereby reducing the vibration and impact noise generated when the motor is initially operated.

Further, since the maximum voltage is not applied when the motor is initially operated, damage to the motor due to an abrupt operation of the motor is prevented, thereby improving the reliability of the motor.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGs. 1(a) and 1(b) are graphs showing the operation state of a conventional air conditioner;
FIG. 2 is a block diagram showing the constitution of an air conditioner according to the present invention;
FIGs. 3(a) and 3(b) are graphs showing the operation state of an air conditioner according to the present invention; and
FIG. 4 is a flow chart showing a method for controlling an air conditioner according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

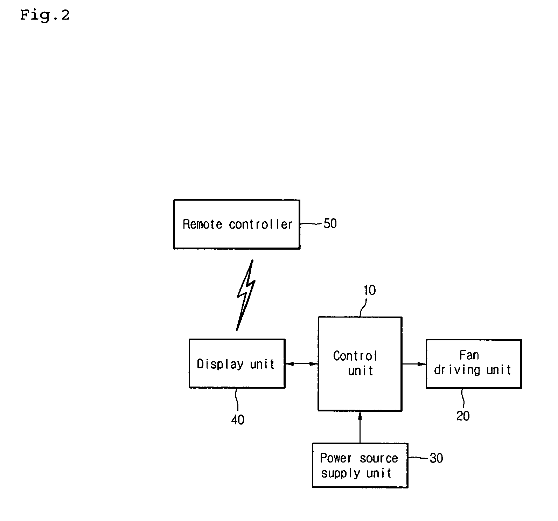

Fig. 1 FIG. 2 is a block diagram showing the constitution of an air conditioner according to the present invention.

Referring to FIG. 2, the air conditioner according to the present invention includes a control unit 10 controlling the operation of the air conditioner according to an input control signal, a fan driving unit 20 driving an indoor fan according to a control signal output from the control unit 10, a power source supply unit 30 supplying the operation power source of the air conditioner, a display unit 40 displaying an input operation control signal and an operation state, and a remote controller 50 inputting a signal for the operation of the air conditioner.

Particularly, the control unit 10 controls the air conditioner so that the maximum power source is not applied to the fan driving unit 20 but the power source of a predetermined ratio of the maximum power source is applied to the fan driving unit 20 when the air conditioner is initially operated. Then, the predetermined ratio of the maximum power source can be set to 30 percent of the maximum power source.

Further, the control unit 10 controls the air conditioner so that the amount of wind supplied from the indoor fan rotated by the fan driving unit 20 reaches a target setting amount of wind by gradually increasing the power source supplied from the fan driving unit 20.

The fan driving unit 20 is driven under the control of the control unit 10 to rotate the indoor fan.

The power source supply unit 30 supplies a power source to the fan driving unit 20 under the control of the control unit 10. As mentioned above, the power source of a predetermined ration of the maximum power source is applied to the fan driving unit 20 during the initial operation of the air conditioner, and the power source applied to the fan driving unit 20 gradually increases.

The display unit 40 displays the input operation control signal and displays the operation state of the air conditioner.

The remote controller 50 allows an operation signal for the operation of the air conditioner to be input from outside.

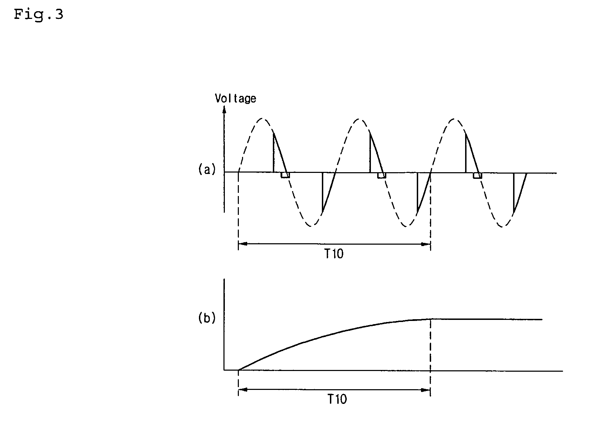

FIGs. 3(a) and 3(b) are graphs showing the operation state of the air conditioner according to the present invention.

FIG. 3(a) is a graph showing voltages input to the fan driving unit of the air conditioner according to the present invention. FIG. 3(b) is a graph showing the change of the amount of the wind discharged from the indoor fan.

First, as shown in FIG. 3(a), the power source initially supplied to the fan driving unit 20 is approximately 30 percent of the maximum voltage. Further, the voltage applied to the fan driving unit 10 gradually increases for the control time T10. As shown in FIG. 3(b), as the voltage increases, the amount of the wind discharged form the indoor fan increases until it reaches the target setting amount of wind.

As mentioned above, if the power source supplied to the fan driving unit 20 gradually increases to be changed to the target setting amount of wind, the control time T10 can be changed according to the target setting amount of wind.

Here, the voltage applied to the motor can increase linearly or nonlinearly.

In the preferred embodiment, the voltage applied to the motor gradually increases until it reaches the target voltage. However, the power source supplied to the motor can increase until it reaches the maximum supply power source and then can decrease to the target voltage.

Hereinafter, a method for controlling the air conditioner according to the present invention will be described.

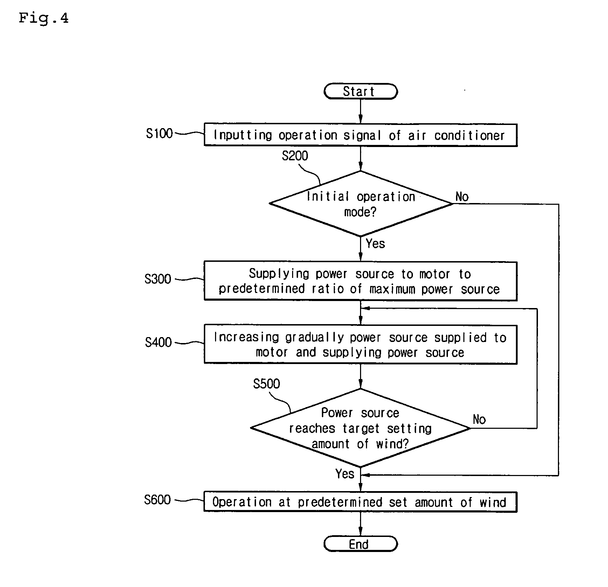

FIG. 4 is a flow chart showing the method for controlling the air conditioner according to the present invention.

Referring to FIG. 4, if an operation signal is input to the air conditioner (S100), the control unit determines whether the air conditioner is in an initial operation mode. (S200)

In the case of the initial operation mode, a power source of a predetermined ratio of the maximum power source operating the indoor fan at the maximum is supplied to the motor. (S300)

Then, as mentioned above, the predetermined ration of the maximum power source operating the indoor fan at the maximum can be set to 30 percent.

After the power source of the predetermined ratio of the maximum power source is supplied to the motor at the initial operation of the air conditioner, the power source supplied to the motor gradually increases. (S400)

While the power source supplied to the motor is increasing, the control unit 10 determines whether the amount of the wind of the indoor fan reaches the target setting amount of wind. (S500)

In the case in which the power source supplied to the indoor fan does not reach the target setting amount of wind, it continuously increases unit it reaches the target setting amount of wind. On the other hand, in the case in which the power source reaches the target setting amount of wind, the air conditioner is operated at a preset amount of wind. (S600)

Then, the air conditioner can be designed and set so that after the power source supplied to the motor gradually increases to the maximum voltage, it gradually decreases, thereby operating the indoor fan at the target setting amount of wind.

As mentioned above, since the power source supplied to the motor during the initial operation of the air conditioner is restricted at a predetermined ratio of the maximum power source when supplied and the target setting amount of wind is reached by gradually increasing the power source supplied to the motor, vibration and impact noise generated during the initial operation of the motor can be reduced.

Further, since the maximum voltage is not applied during the initial operation of the motor, damage to the motor due to an abrupt operation of the motor is prevented, thereby improving the reliability of the motor.

It will be apparent to those skilled in the art that various modifications and variations can be made in the present invention. Thus, it is intended that the present invention covers the modifications and variations of this invention provided they come within the scope of the appended claims and their equivalents.

## Claims

1. An air conditioner comprising:
a power source supply unit supplying a power source for the operation of the air conditioner;
a fan driving unit driving an indoor fan with the power source supplied from the power source supply unit; and
a control unit allowing the power source reach a target power source after applying the power source of a predetermined ratio of a maximum power source to the fan driving unit when the indoor fan is initially operated.

2. An air conditioner according to claim 1, wherein the power source applied to the fan driving unit gradually increases until the power source reaches the target power source.

3. An air conditioner according to claim 1, wherein after the power source supplied to the fan driving unit gradually increases to the maximum power source, the power source gradually decreases to reach the target power source.

4. An air conditioner according to claim 1, wherein the target power source is a power source of the case in which the amount of wind supplied by the indoor fan reaches a target setting amount of the wind.

5. An air conditioner according to claim 1, wherein the power source supplied to the fan driving unit when the indoor fan is initially operated is 30 percent of the maximum power source.

6. A method for controlling an air conditioner, which comprises the steps of:
supplying a power source restricted to a predetermined ratio of a maximum power source to a fan driving unit, when an indoor fan is initially operated; and
allowing the power source supplied to the fan driving unit to reach a target power source.

7. A method according to claim 6, wherein the power source supplied to the fan driving unit when the indoor fan is initially operated is 30 percent of the maximum power source.

8. A method according to claim 6, wherein the power source applied to the fan driving unit gradually increases until the power source reaches the target power source.

9. A method according to claim 8, wherein the power source increases linearly or nonlinearly.

10. A method according to claim 6, wherein after the power source supplied to the fan driving unit gradually increases to the maximum power source, the power source gradually decreases to reach the target power source.

11. A method according to claim 6, wherein the target power source is a power source of the case in which the amount of wind supplied by the indoor fan reaches a target setting amount of the wind.

12. A method according to claim 6, wherein a control time for the power source applied to the fan driving unit to reach the target power source is changed in accordance with a target amount of wind of the indoor fan.

13. A method for controlling an air conditioner, which comprises the steps of:
applying a power source restricted to a predetermined ratio of a maximum power source to a fan driving unit driving an indoor fan when the air conditioner is initially operated; and
increasing gradually the power source applied to the fan driving unit so that the amount of wind supplied by the indoor fan can reach a target setting amount of the wind.
